# EUROPÄISCHE PATENTSCHRIFT

(11) **EP 2 059 146 B1**
(45) Veröffentlichungstag und Bekanntmachung des Hinweises auf die Patenterteilung: **13.10.2010**
(21) Anmeldenummer: 07788515.0
(22) Anmeldetag: 22.08.2007
(51) Int. Cl.: A47B 88/00

(54) **SCHUBKASTEN**
DRAWER
TIROIR

(30) Priorität: 08.09.2006 DE 202006014019 U; 02.02.2007 DE 202007001781 U
(43) Veröffentlichungstag der Anmeldung: 20.05.2009
(73) Patentinhaber: Paul Hettich GmbH & Co. KG, 32278 Kirchlengern (DE)
(72) Erfinder: STUFFEL, Andreas, 31675 Bückeburg (DE)
(74) Vertreter: Dantz, Jan Henning
(86) Internationale Anmeldenummer: PCT/EP2007/058738
(87) Internationale Veröffentlichungsnummer: WO 2008/028812

(56) Entgegenhaltungen:
- EP-A- 0 654 234
- EP-A- 0 722 680
- EP-A- 0 917 842
- DE-A1- 3 942 897
- DE-A1- 4 330 919
- GB-A- 2 101 879
- GB-A- 2 206 034
- US-A- 5 618 091
- US-A1- 2005 140 256

## Beschreibung

Die Erfindung bezieht sich auf einen Schubkasten gemäss dem Oberbegriff des Anspruchs 1, vgl. EP-A-0 722 680.

Der in Rede stehende Schubkasten wird in einen Möbelkorpus eingesetzt. Die seitlichen Zargen bilden bei diesen Schubkästen die seitlichen Begrenzungen, wobei die Rückwand und die Frontblende quer zu den seitlichen Zargen sowie senkrecht zum Boden stehen. Diese Schubkästen haben sich bei den verschiedenen Möbelarten bewährt, beispielsweise bei Küchenmöbeln, Wohnzimmermöbeln, Schlafzimmermöbeln und dergleichen.

Derartige Möbel werden u.a. auch im zerlegten Zustand in sogenannten Mitnahmemärkten verkauft. Die Montage der Möbel erfolgt dann üblicherweise vom Käufer selbst. Die in Rede stehenden Möbel bzw. Möbelbauteile wie Schubkästen und dergleichen müssen unter Berücksichtigung dieser Gegebenheiten konstruiert sein.

Der Erfindung liegt die Aufgabe zugrunde, einen Schubkasten der eingangs näher beschriebenen Art zu schaffen, der auch von technisch nicht versierten Personen vom zerlegten Zustand ohne Zuhilfenahme von Werkzeugen zusammengesetzt werden kann, wobei die Verbindungen zwischen der Rückwand und den Zargen ohne mechanische Verbindungselemente ausgeführt sein sollen.

Die gestellte Aufgabe wird gelöst mit dem Gegenstand des Anspruchs 1.

Die Adapterprofilabschnitte werden bereits vom Hersteller des Schubkastens an den seitlichen Zargen befestigt. Da die Verbindungen aus Steckverbindern und/oder Klemmverbindern bestehen, ist das Zusammenführen der Rückwand mit den seitlichen Zargen durch diese Gestaltung bereits vorgegeben, so dass der Zusammenbau sich sinngemäß von selbst ergibt. Dabei sollten die Steckverbinder und/oder die Klemmverbinder so ausgelegt sein, dass die Verbindungen nur in der richtigen Folge durchgeführt werden können.

Erfindungsgemäss sind die Steckverbinder durch Einschnitte und darin eingreifende Einsteckzungen gebildet und die Einsteckzungen sind so gestaltet, dass nach dem Einstecken dieser Einsteckzungen ein Formschluss zwischen den einander zugeordneten Bereichen gebildet wird. Damit eine in sich stabile Verbindung zwischen der Rückwand und jeder seitlichen Zarge gebildet wird, ist vorgesehen, dass in jeder seitlichen Zarge zwei Einschnitte im Abstand sowie übereinander vorgesehen sind, und dass lagegerecht an der Rückwand zwei Einsteckzungen angesetzt oder angeformt sind. Damit die Verbindungen zwischen den Einschnitten und den Einsteckzungen durch normale Krafteinwirkung nicht gelöst werden kann, ist vorgesehen, dass die Einschnitte Einstecktaschen begrenzen, wobei die an die Einschnitte angrenzenden, der Rückwand abgewandt liegenden Bereiche dellenartig gestaltet sind.

Damit die Einsteckzungen auch in die Einschnitte bzw. in die Einstecktaschen einsteckbar sind, ist vorgesehen, dass die Adapterprofilabschnitte zumindest in den Bereichen der Einschnitte in einem Freiraum liegen, und dass die Adapterprofilabschnitte zumindest in den Bereichen der Einschnitte in Abständen zu den seitlichen Zargen stehen. Es ist deshalb vorgesehen, dass jedes Adapterprofil, in einer Stirnansicht gesehen, Z-förmig gestaltet ist. Dabei ist dann der obere Randbereich mit der zugehörigen seitlichen Zarge fest verbunden, beispielsweise durch Punktschweißung oder Klebung, sofern die Zargen und die Adapterprofilabschnitte aus Metall bestehen.

Die Rückwand ist im Querschnitt U-förmig gestaltet. Dies kann beispielsweise durch einen Abschnitt eines entsprechenden Profils erfolgen. Dabei sind in bekannter Weise die parallelen Schenkel deutlich kürzer als der Abstand zwischen den beiden Schenkeln. Damit die Verbindungen zwischen der Rückwand und den Adapterprofilabschnitten bzw. den seitlichen Zargen einfach hergestellt werden kann, ist vorgesehen, dass die Endbereiche des mittleren Schenkels abgewinkelt sind. Dabei zeigen die Abwinkelungen zu der der Frontblende des Schubkastens abgewandten Seite bzw. zur rückwärtigen Seite. Der zu dem mittleren Schenkel eingeschlossene Winkel des abgewinkelten Bereiches steht unter einem rechten Winkel zu dem mittleren Schenkel. Durch diese Abwinkelung ist es äußerst einfach, die Einsteckzungen in die Schlitze bzw. in die Einstecktaschen einzuführen.

Erfindungsgemäss stehen die Einsteckzungen gegenüber den restlichen freien Kanten des abgewinkelten Bereiches vor. Damit die ineinander greifenden Bereiche der Einsteckzungen und der Einschnitte bzw. der Einstecktaschen verspannt werden, ist noch vorgesehen, dass die Einsteckzungen ebenfalls abgewinkelt sind.

Eine besonders einfache Ausführung zur Fixierung des Bodens des Schubkastens ist gegeben, wenn an jedem Adapterprofilabschnitt ein rechtwinklig zur seitlichen Zarge stehender Auflagesteg angesetzt oder angeformt ist, auf den der Boden des Schubkastens abstützbar ist. Die Auflagestege stehen im montierten Zustand des Schubkastens in einer horizontalen Ebene und sind aufeinander zu gerichtet.

Zur Fixierung des Bodens des Schubkastens ist jeder Auflagesteg mit in Richtung zum oberen Rand der seitlichen Zarge gerichteten Sicherungsabschnitten versehen, die in eine in Verschieberichtung des Schubkastens verlaufende Nut des Bodens eingreifen. Da dieser Auflagesteg aus Metall gefertigt ist, ist vorgesehen, dass jeder Sicherungsabschnitt dach- bzw. dreieckförmig gestaltet und durch Verformung eines zwischen zwei Einschnitten liegenden Bereiches gebildet ist. Während sich jeder Adapterprofilabschnitt nur über den rückwärtigen, der Rückwand des Schubkastens zugeordneten Bereich erstreckt, erstrecken sich die beiden Auflagestege über die gesamten Längen der Zargen. Zur zusätzlichen Sicherung der Verbindungen zwischen der Rückwand und den Adapterprofilabschnitten ist noch vorgesehen, dass in dem rückwärtigen, der Rückwand zugeordneten Bereich der Auflagestege ein Endanschlag angesetzt oder angeformt ist. Zur Verspannung ist vorgesehen, dass die Endanschläge an der der Rückwand abgewandten Seite eine Anlaufschräge aufweisen. Daraus ergibt sich der Vorteil, dass die Rückwand zunächst in eine Schrägstellung zur Zarge gebracht wird und dass sie anschließend in Richtung zur Zarge verschwenkt wird, bis sie in einem rechten Winkel dazu steht. Dieser Anschlag verhindert, dass die Rückwand dann entgegen der ursprünglichen Richtung geschwenkt werden kann.

Anhand der beiliegenden Zeichnungen wird die Erfindung noch näher erläutert.

Es zeigen:
- Figur 1: einen Schubkasten in perspektivischer Darstellung mit Blick auf die Frontblende und auf die Innenfläche der Rückwand und einer Seiten- zarge
- Figur 2: die Verbindung eines Endbereiches der Rückwand mit einem Adapter- profilabschnitt in sprengbildlicher Darstellung mit Blick auf die der Frontblende abgewandt liegende Fläche der Rückwand
- Figur 3: eine der Figur 2 entsprechende Darstellung, jedoch die Rückwand mit dem Adapterprofilabschnitt im eingesteckten Zustand
- Figur 4: die Verbindung des Adapterprofilabschnittes mit der Rückwand, von dem Schubkasteninneren gesehen
- Figur 5: eine der Figur 4 entsprechende Darstellung, bei der jedoch die Rück- wand in die endgültige Stellung geschwenkt ist und
- Figur 6: die Verbindung zwischen dem Adapterprofilabschnitt und der Rück- wand mit Blick auf die der Frontblende abgewandt liegende Fläche der Rückwand
- Figur 7: eine Einzelheit, den Endanschlag und einen Sicherungsabschnitt zei- gend
- Figur 8: eine perspektivische Teildarstellung eines Eckbereiches des Schubkas- tens von dessen Rückseite her gesehen.

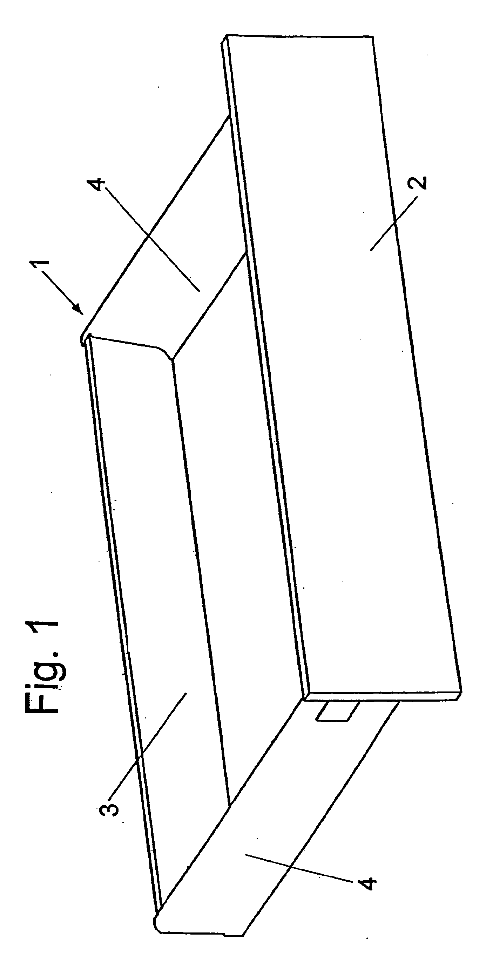

Der in der Figur 1 dargestellte Schubkasten 1 besteht im Wesentlichen aus der Frontblende 2, der Rückwand 3 und den beiden seitlichen Zargen 4.

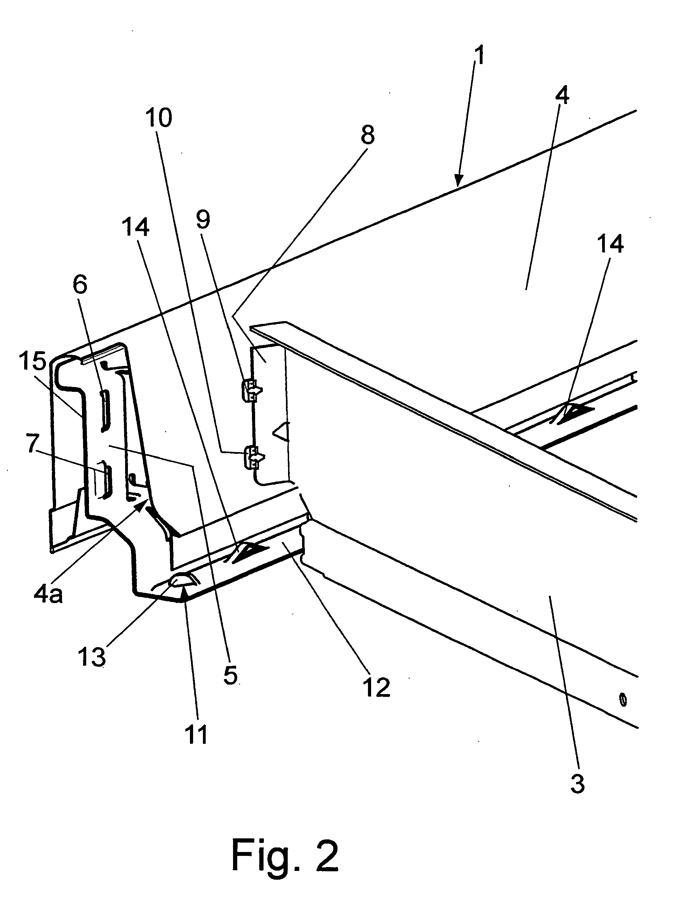

Die Verbindungen der beiden seitlichen Zargen 4 mit der Rückwand 3 wird anhand der Figuren 2 - 6 noch weiter erläutert, wobei aus Gründen der vereinfachten Darstellung lediglich immer nur eine Verbindung dargestellt ist.

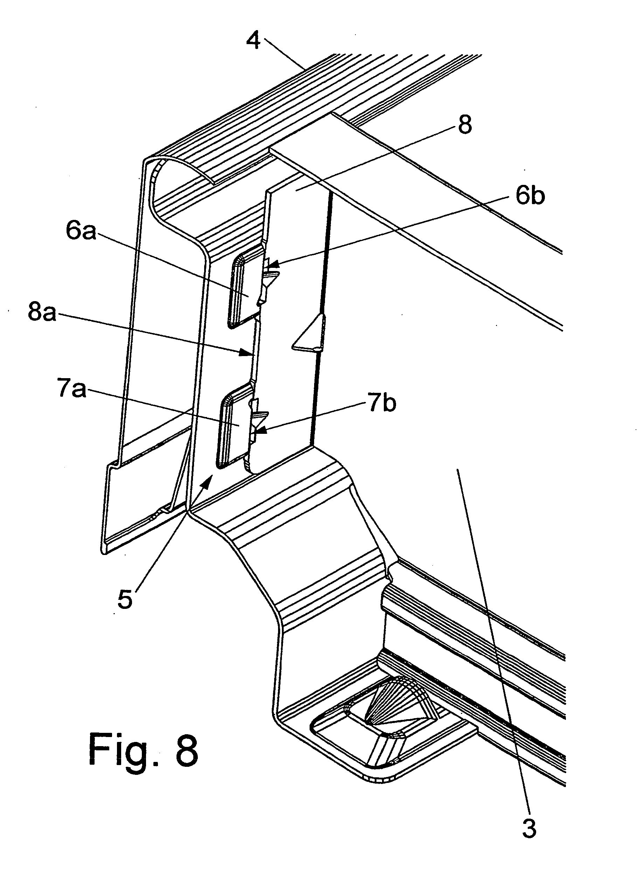

Wie die Figur 2 zeigt, ist innenseitig, d.h. an den einander zugewandten Seiten der Seitenzargen 4 ein Adapterprofilabschnitt 5 festgelegt. Dieser liegt im rückwärtigen Bereich. In nicht näher dargestellter Weise können mehrere Adapterprofilabschnitte 5 an den seitlichen Zargen 4 festgelegt sein. Jeder Adapterprofilabschnitt 5 ist mit Blick auf die Stirnfläche Z-förmig gestaltet, wobei der obere Bereich an der Innenfläche der Seitenzarge 4 anliegt. Die Rückwand 3 ist über Steck- und/oder Klemmverbinder an dem rückwärtigen Adapterprofilabschnitt 5 in noch näher erläuterter Weise festgelegt. Zur Bildung dieser Verbindungen sind in dem Adapterprofilabschnitt 5 zwei im Abstand und übereinander liegende Einschnitte 6, 7 eingebracht. Die der Rückwand 3 abgewandt liegenden Randbereiche für die Einschnitte 6, 7 sind jeweils in Richtung zum gegenüberliegenden Adapterabschnitt 5 dellenartig ausgebeult, und zwar durch Ausprägungen 6a bzw. 7a, wie sich aus Figur 8 sehr deutlich ergibt, so dass durch die Einschnitte 6, 7 Einstecktaschen begrenzt sind.

Die Rückwand 3 ist im Querschnitt U-förmig gestaltet, wobei die beiden parallelen Schenkel deutlich kürzer sind als der dazwischenliegende Mittelschenkel. Außerdem sind diese parallelen Schenkel in zur Frontblende 2 entgegengesetzter Richtung abgewinkelt. Die beiden Endbereiche des Mittelschenkels der Rückwand 3 sind abgewinkelt und stehen maximal in einem rechten Winkel zum Mittelschenkel, wobei ein geringfügig kleinerer Winkel als 90° zwischen den Abwinkelungen 8 und der Rückseite des Mittelschenkels der Rückwand 3 bevorzugt ist. Diese Abwinkelungen sind durch das Bezugszeichen 8 gekennzeichnet. Gegenüber den restlichen freien Rändern 8a dieser Abwinkelungen 8 (siehe Figur 8) stehen zwei Einsteckzungen 9, 10 vor, die in die Einschnitte 6, 7 bzw. in die Einstecktaschen eingesetzt werden. Dazu wird zunächst die Rückwand 3 in eine Schrägstellung zur seitlichen Zarge 4 gebracht. Da die Einsteckzungen 9, 10 abgewinkelt sind, können sie nach Drehung der Rückwand 3 in Richtung zur Zarge 4 in eine rechtwinklig dazu stehende Stellung nicht mehr aus den Einschnitten 6, 7 bzw. aus den Einstecktaschen herausgezogen werden. Nachdem eine Seitenzarge 4 mit der Rückwand 3 verbunden ist, wird die nächste Seitenzarge 4 in eine solche Stellung gebracht, dass auch der eingeschlossene Winkel zwischen der Seitenzarge 4 und der Rückwand 3 ein stumpfer Winkel ist. Anschließend erfolgt dann eine relative Verschwenkung zwischen Rückwand 3 und Seitenzarge 4 bis in eine entsprechend Endmontagestellung.

Die dem Innenraum des Schubkastens 1 zugewandte Innenseite der Rückwand liegt im montierten Zustand an einer Stirnkante 4a der Seitenzargen 4 an, wobei sich diese Bezeichnung der Stirnkante 4a besonders aus Figur 2 ergibt. Ebenfalls im montierten Zustand liegen die freien Ränder 8a der Abwinkelungen 8 an den die Ausprägungen 6a bzw. 7a zur Rückwandseite hin begrenzenden Stirnkanten 6b bzw. 7b abstützend an, was sich aus Figur 8 deutlich ergibt. Um nun zu erreichen, dass sich im Anlagebereich zwischen der Rückwand 3 und den Stirnkanten 4a der Seitenzargen 4 eine saubere, geschlossene Anlage ergibt, ist vorgesehen, den Abstand zwischen den Stirnkanten 6b bzw. 7b und der Stirnkante 4a der Seitenzargen 4 etwas geringer zu halten als das Maß zwischen den sich an den besagten Stirnkanten 6a bzw. 7b abstützenden freien Rändern 8 und der Innenseite der Rückwand 3. Dadurch wird die Rückwand 3 unter Vorspannung an die Stirnkanten 4a der Seitenzargen 4 angedrückt. Eine saubere, zumindest optisch dichte Anlage der Rückwand an den Stirnkanten 4a ist damit gewährleistet.

Nach dem endgültigen Überführen der Seitenzargen 4 und der Rückwand 3 in die Funktionsstellung, ist der Schubkasten 1 stabilisiert und eine Drehung der Rückwand 3 in einer entgegengesetzten Richtung ist durch einen Endanschlag 11 verhindert. Wie insbesondere die Figuren 2 - 6 zeigen, sind an den Adapterprofilabschnitten 5 sich über die Tiefe des Schubkastens 1 erstreckende Auflagestege 12 angesetzt oder angeformt. Diese stehen rechtwinklig zu den Ebenen der Zargen 4 und bilden Auflager für den nicht dargestellten Boden des Schubkastens 1.

Der Endanschlag 11 ist durch Kaltverformung gebildet, und weist, bezogen auf den Endzustand des Schubkastens, an der der Rückwand 3 abgewandten Fläche eine Anlaufschräge 13 auf. Diese wird von dem zugeordneten Bereich der Rückwand 3 beim Verschwenken in eine zur seitlichen Zarge 4 rechtwinkligen Stellung übersprungen. Die der Rückwand 3 zugewandte Fläche 16 dieses Endanschlages 11 steht rechtwinklig zum Auflagesteg 12, so dass das Zurückdrehen der Rückwand 3 verhindert wird.

In den Auflagestegen 12 für den Boden des Schubkastens 1 sind mehrere im Abstand zueinander angeordnete Sicherungsabschnitte 14 eingebracht, die in Richtung zum oberen Rand der seitlichen Zarge 4 gerichtet sind. Diese Sicherungsabschnitte 14 sind durch zwei parallel und im Abstand zueinander verlaufende Einschnitte geformt, indem die dazwischenliegenden Bereiche in Richtung zum oberen Rand der seitlichen Zarge 4 geformt sind. Die Sicherungsabschnitte 14 sind demzufolge dreieck- bzw. dachförmig. Sie greifen in eine in Verschieberichtung des Schubkastens 1 verlaufende Nut des Bodens ein.

Die Seitenzargen 4, die Adapterabschnitte 5 und die Rückwand sind aus Metall, üblicherweise durch Kaltverformung hergestellt. Es sei noch erwähnt, dass die Endanschläge 11 und die Sicherungsabschnitte 14 auch durch eingesetzte Zapfen oder dergleichen gebildet sein können.

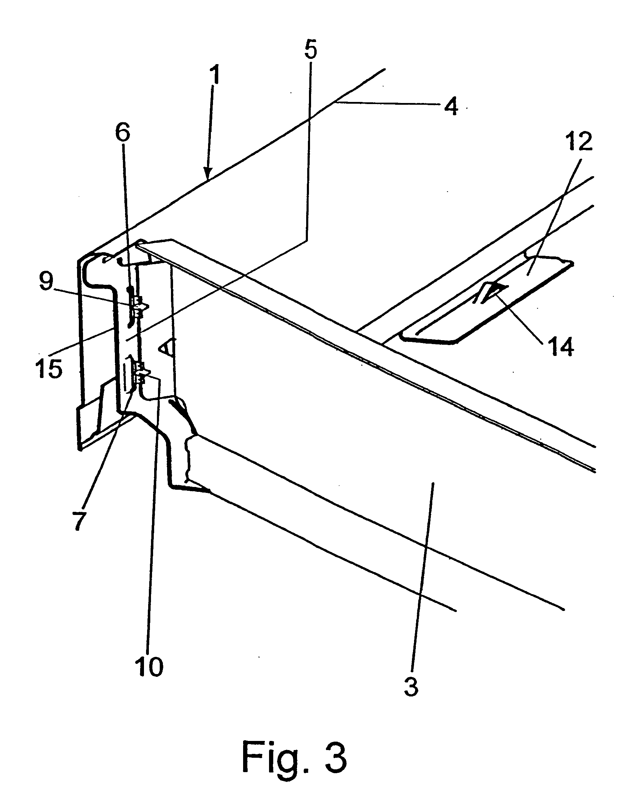

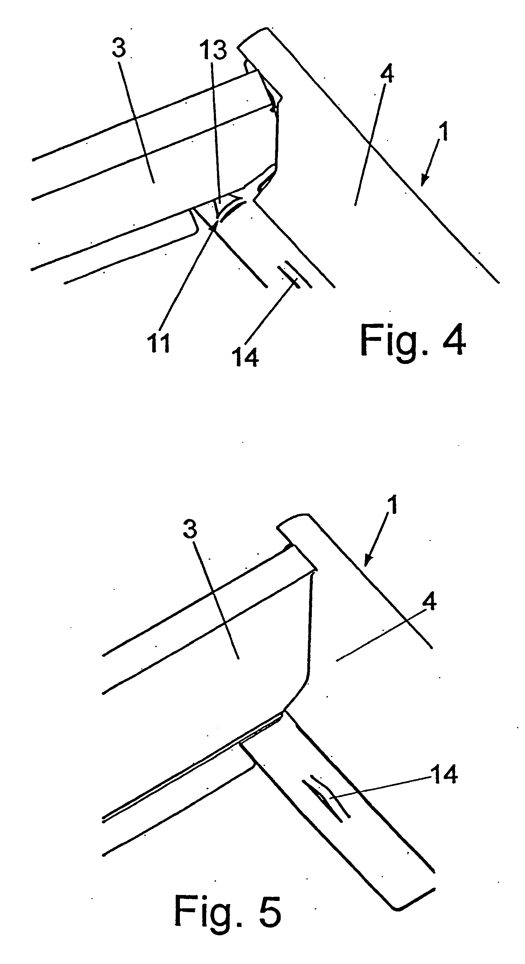

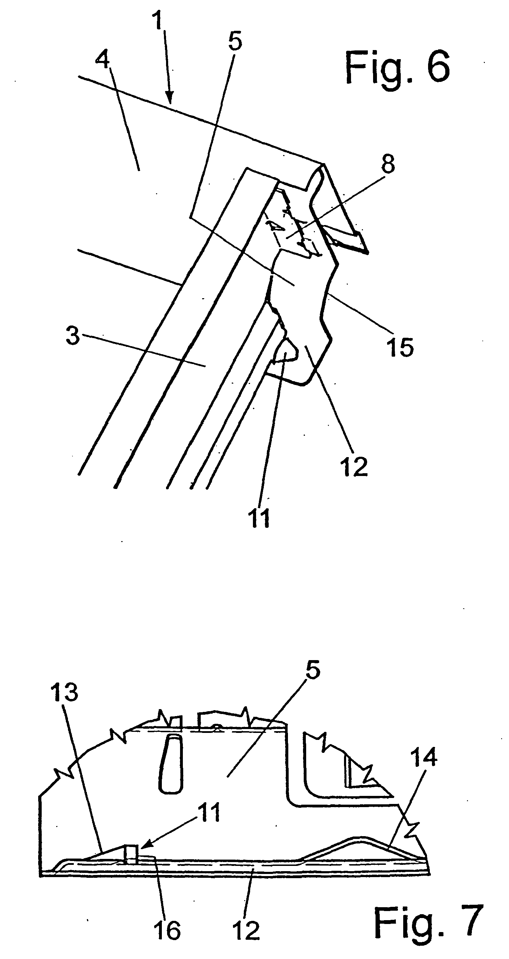

Die Figur 6 zeigt, dass nach dem Drehen der Rückwand 3 in die zur jeweiligen Zarge 4 rechtwinklige Stellung der Endanschlag 11 übersprungen ist und ein Zurückdrehen verhindert ist. In den Figuren 2 und 3 sind die äußeren Stirnflächen der Adapterprofilabschnitte durch das Bezugszeichen 15 gekennzeichnet. Die Figur 4 zeigt, dass bei der Drehung der Rückwand 3 in eine zur Seitenzarge 4 rechtwinklige Stellung die Anlaufschräge 13 übersprungen wird. Die Figur 5 zeigt, dass nach dem endgültigen Überführen der Rückwand 3 in eine zur Zarge 4 rechtwinklige Stellung der Endanschlag 11 übersprungen ist. In dieser Ansicht ist er demzufolge unsichtbar.

Die Figur 6 zeigt die Rückwand 3 in der zur Zarge 4 endgültigen Stellung. Danach ist der Endanschlag 11 von der Rückwand 3 übersprungen und liegt an der der Frontblende 2 abgewandten Seite der Rückwand 3. Außerdem sind die endseitigen Abwinkelungen 8 des Mittelsteges der im Querschnitt U-förmigen Rückwand 3 erkennbar.

Schließlich zeigt die Figur 7 noch die dachförmige bzw. dreieckförmige Gestaltung der Sicherungsabschnitte 14, die durch Kaltverformung aus den Auflagestegen 12 erstellt wurden. Außerdem zeigt diese Figur, dass der Endanschlag 11 an der der Frontblende 2 abgewandten Seite die Anlaufschräge 13 aufweist, und dass der der Frontblende 2 zugewandte Bereich bzw. die der Frontblende 2 zugewandte Fläche 16 rechtwinklig zum Auflagesteg 12 steht und demzufolge ein Zurückdrehen der Rückwand 3 verhindert.

Die Erfindung ist nicht auf das dargestellte Ausführungsbeispiel beschränkt. Wesentlich ist, dass die Verbindung der Rückwand 3 mit den seitlichen Zargen 4 ohne Verwendung von mechanischen Verbindungselementen und ohne Zuhilfenahme von Werkzeugen auch von technisch nicht versierten Käufern eines Möbels durchgeführt werden kann. Dazu sollten die aus den Einschnitten 6, 7 und den Einsteckzungen 9, 10 gebildeten Steck- und/oder Klemmverbindungen so gestaltet sein, dass sich sinngemäß die richtige Zuordnung zueinander aufdrängt. Ferner ist von Bedeutung, dass nach dem Überführen der Rückwand 3 in eine zu der jeweiligen seitlichen Zarge 4 rechtwinkligen Stellung der Endanschlag 11 von dem unteren Randbereich der Rückwand 3 übersprungen wird, so dass ein Zurückdrehen verhindert ist. Ferner müssen die aus den Einschnitten 6, 7 und den Einsteckzungen 9, 10 gebildeten Verbindungen so ausgebildet sein, dass der Schubkasten 1 die notwendige Eigenstabilität aufweist.

## Patentansprüche

1. Schubkasten (1) mit einem Schubkastenboden, einer Frontblende (2) und einer der Frontblende (2) gegenüberliegenden Rückwand (3) und mit zwei in Verschieberichtung des Schubkastens (1) verlaufenden, als Hohlprofilabschnitte ausgebildeten seitlichen Zargen (4), die mit den Endbereichen der Rückwand (3) fest verbunden sind, wobei an den einander zugewandten Seiten der Zargen (4) in den der Rückwand (3) zugeordneten Endbereichen Adapterprofilabschnitte (5) festgelegt sind, die mit den Endbereichen der Rückwand (3) durch Steckverbinder (6, 7, 9, 10) und/oder Klemmverbinder verbunden sind, **dadurch gekennzeichnet, dass** die Steckverbinder durch Einschnitte (6, 7) und darin eingreifende Einsteckzungen (9, 10) gebildet sind und die Einschnitte (6, 7) und die darin eingreifenden Einsteckzungen (9, 10) formschlüssig miteinander verbunden sind, wobei die Rückwand (3) im Querschnitt U-förmig gestaltet ist und die paralleten Schenkel zu der der Frontblende (2) abgewandten Seite zeigen, und dass die Endbereiche des mittleren Schenkels als Abwinkelungen (8) ausgebildet sind und die Einsteckzungen (9, 10) gegenüber den restlichen Kanten der Abwinkelungen (8) vorstehen.

2. Schubkasten nach Anspruch 1, **dadurch gekennzeichnet, dass** in jeder seitlichen Zarge (4) zwei Einschnitte (6, 7) im Abstand sowie übereinander vorgesehen sind, und dass lagegerecht an der Rückwand zwei Einsteckzungen (9, 10) angesetzt oder angeformt sind.

3. Schubkasten nach Anspruch 1 oder 2, **dadurch gekennzeichnet, dass** die Einschnitte (6, 7) Einstecktaschen begrenzen, wobei die an die Einschnitte (6, 7) angrenzenden, der Rückwand abgewandt liegenden Bereiche dellenartig gestaltet sind.

4. Schubkasten nach einem oder mehreren der vorstehenden Ansprüche 1- 3, **dadurch gekennzeichnet, dass** die Adapterprofilabschnitte (5) zumindest in den Bereichen der Einschnitte in Abständen zu den seitlichen Zargen (4) stehen.

5. Schubkasten nach einem oder mehreren der vorstehenden Ansprüche 1 - 4, **dadurch gekennzeichnet, dass** jedes Adapterprofil, in einer Stirnansicht gesehen, Z-förmig gestaltet ist.

6. Schubkasten nach einem oder mehreren der vorstehenden Ansprüche 1 - 5, **dadurch gekennzeichnet, dass** die Einsteckzungen (9, 10) abgewinkelt sind.

7. Schubkasten nach einem oder mehreren der vorstehenden Ansprüche 1 - 6, **dadurch gekennzeichnet, dass** an den Adapterprofilabschnitten (5) rechtwinklig zur seitlichen Zarge (4) stehende Auflagestege (12) angesetzt oder angeformt sind, auf die der Boden des Schubkastens (1) abstützbar ist.

8. Schubkasten nach einem oder mehreren der vorstehenden Ansprüche 1 - 7, **dadurch gekennzeichnet, dass** die Adapterprofilabschnitte (5) sich über bestimmte Bereiche der Zargen (4) erstrecken, und dass sich die Auflagestege (12) über die gesamten Längen der Zargen (4) erstrecken.

9. Schubkasten nach einem oder mehreren der vorstehenden Ansprüche 1 - 8, **dadurch gekennzeichnet, dass** im der Rückwand (3) zugeordneten Bereich jedes Auflagesteges (12) ein Endanschlag (11) angesetzt oder angeformt ist.

10. Schubkasten nach Anspruch 9, **dadurch gekennzeichnet, dass** jeder Endanschlag (11) an der der Rückwand (3) abgewandten Seite eine Anlaufschräge (13) aufweist, und dass die Rückwand kontaktierende Stirnfläche (15) flächig ausgebildet und senkrecht zum Auflagesteg (12) steht.

11. Schubkasten nach einem der vorhergehenden Ansprüche, **dadurch gekennzeichnet, dass** die Abwinkelungen (8) gegenüber dem mittleren Schenkel der Rückwand (3) um 90° oder um einen Winkel geringfügig kleiner als 90° abgewinkelt sind.

12. Schubkasten nach einem der vorhergehenden Ansprüche, **dadurch gekennzeichnet, dass** die Einschnitte (6, 7) rückseitig durch Ausprägungen (6a, 7a) begrenzt sind, an deren Stirnkanten (6b, 7b) die freien Ränder (8a) der Abwinkelungen (8) der Rückwand (3) abstützend anliegen.

13. Schubkasten nach Anspruch 12, **dadurch gekennzeichnet, dass** die Rückwand (3) innenseitig an Stirnkanten (4a) der Seitenzargen (4) anliegt und dass der Abstand zwischen den Stirnkanten (6b, 7b) der Ausprägungen (6a, 7a) und den Stirnkanten (4a) der Seitenzargen (4) geringfügig kleiner ist als das Maß zwischen den freien Rändern (8a) der Abwinkelungen (8) und der Innenseite der Rückwand (3).

## Claims

1. Drawer (1) with a drawer base, a front panel (2) and a back wall (3) lying opposite the front panel (2), and with two lateral frames (4) which run in the direction of displacement of the drawer (1), are designed as hollow profile sections and are connected fixedly to the end regions of the back wall (3), wherein adapter profile sections (5) are fixed in the end regions assigned to the back wall (3) on the mutually facing sides of the frames (4) and are connected to the end regions of the back wall (3) by plug-in connectors (6, 7, 9, 10) and/or clamping connectors, **characterized in that** the plug-in connectors are formed by incisions (6, 7) and plug-in tongues (9, 10) engaging therein, and the incisions (6, 7) and the plug-in tongues (9, 10) engaging therein are connected to one another in an interlocking manner, the back wall (3) being of U-shaped design in cross section and the parallel limbs pointing to the side facing away from the front panel (2), and **in that** the end regions of the central limb are designed as angled portions (8) and the plug-in tongues (9, 10) protrude in relation to the residual edges of the angled portions (8).

2. Drawer according to Claim 1, **characterized in that** two incisions (6, 7) are provided at a distance from each other and one above the other in each lateral frame (4), and **in that** two plug-in tongues (9, 10) are attached to or are integrally formed on the back wall in a suitable position.

3. Drawer according to Claim 1 or 2, **characterized in that** the incisions (6, 7) bound plug-in pockets, the regions which are adjacent to the incisions (6, 7) and are remote from the back wall being designed in the manner of dents.

4. Drawer according to one or more of the preceding Claims 1 - 3, **characterized in that** the adapter profile sections (5) are at a distance from the lateral frames (4) at least in the regions of the incisions.

5. Drawer according to one or more of the preceding Claims 1 - 4, **characterized in that** each adapter profile is of Z-shaped design, as seen in an end view.

6. Drawer according to one or more of the preceding Claims 1 - 5, **characterized in that** the plug-in tongues (9, 10) are angled.

7. Drawer according to one or more of the preceding Claims 1 - 6, **characterized in that** supporting webs (12) which are at right angles to the lateral frame (4) and on which the base of the drawer (1) can be supported are attached to or are integrally formed on the adapter profile sections (5).

8. Drawer according to one or more of the preceding Claims 1 - 7, **characterized in that** the adapter profile sections (5) extend over certain regions of the frames (4), and **in that** the supporting webs (12) extend over the entire length of the frames (4).

9. Drawer according to one or more of the preceding Claims 1 - 8 **characterized in that** an end stop (11) is attached or is integrally formed **in that** region of each supporting web (12) which is assigned to the back wall (3).

10. Drawer according to Claim 9, **characterized in that**, on the side facing away from the back wall (3), each end stop (11) has a run-on slope (13), and **in that** the end surface (15) in contact with the back wall is of planar design and is perpendicular to the supporting web (12).

11. Drawer according to one of the preceding claims, **characterized in that** the angled portions (8) are angled by 90° or by an angle slightly less than 90° in relation to the central limb of the back wall (3).

12. Drawer according to one of the preceding claims, **characterized in that** the incisions (6, 7) are bounded on the rear side by stamped configurations (6a, 7a), against the end edges (6b, 7b) of which the free borders (8a) of the angled portions (8) of the back wall (3) bear in a supporting manner.

13. Drawer according to Claim 12, **characterized in that** the back wall (3) bears on the inside against end edges (4a) of the side frames (4), and **in that** the distance between the end edges (6b, 7b) of the stamped configurations (6a, 7a) and the end edges (4a) of the side frames (4) is slightly smaller than the measurement between the free borders (8a) of the angled portions (8) and the inside of the back wall (3).

## Revendications

1. Tiroir (1) comprenant un fond de tiroir, un panneau frontal (2) et une paroi arrière (3) faisant face au panneau frontal (2) et deux montants (4) latéraux, agencés dans le sens de coulissement du tiroir (1), conçus sous forme de parties de profil creux, qui sont reliés fixement aux zones d'extrémité de la paroi arrière (3), des parties de profil d'adaptation (5) étant fixées sur les côtés se faisant face des montants (4) dans les zones d'extrémité associées à la paroi arrière (3), lesquelles parties sont reliées aux zones d'extrémité de la paroi arrière (3) par des attaches d'emboîtement (6, 7, 9, 10) et/ou des attaches de serrage, **caractérisé en ce que** les attaches d'emboîtement sont formées par des entailles (6, 7) et des languettes d'emboîtement (9, 10) s'engageant à l'intérieur et les entailles (6, 7) et les languettes d'emboîtement (9, 10) s'engageant dedans sont reliées les unes aux autres par complémentarité de formes, la paroi arrière (3) étant conçue avec une section en U et les branches parallèles étant dirigées vers le côté opposé au panneau frontal (2), et **en ce que** les zones d'extrémité de la branche centrale sont conçues sous forme de parties coudées (8) et les languettes d'emboîtement (9, 10) débordent par rapport aux arêtes restantes des parties coudées (8).

2. Tiroir selon la revendication 1, **caractérisé en ce que,** dans chaque montant (4) latéral, deux entailles (6, 7) sont prévues à distance et l'une au - dessus de l'autre, et **en ce que** deux languettes d'emboîtement (9, 10) sont aboutées en position correcte à la paroi arrière ou formées dessus.

3. Tiroir selon la revendication1 ou 2, **caractérisé en ce que** les entailles (6, 7) délimitent des poches d'emboîtement, les zones contigües aux entailles (6, 7) et opposées à la paroi arrière étant conçues en forme de bosses.

4. Tiroir selon l'une quelconque ou plusieurs des revendications précédentes 1 à 3, **caractérisé en ce que** les parties de profil d'adaptation (5) sont situées au moins dans les zones des entailles à distance des montants (4) latéraux.

5. Tiroir selon l'une quelconque ou plusieurs des revendications précédentes 1 à 4, **caractérisé en ce que** chaque profil d'adaptation, vu de côté, est conçu en forme de Z.

6. Tiroir selon l'une quelconque ou plusieurs des revendications précédentes 1 à 5, **caractérisé en ce que** les languettes d'emboîtement (9, 10) sont coudées.

7. Tiroir selon l'une quelconque ou plusieurs des revendications précédentes 1 à 6, **caractérisé en ce que** des nervures d'appui (12) disposées à angle droit par rapport au montant (4) latéral sont aboutées aux parties de profil d'adaptation (5) ou moulées dessus, nervures sur lesquelles le fond du tiroir (1) peut s'appuyer.

8. Tiroir selon l'une quelconque ou plusieurs des revendications précédentes 1 à 7, **caractérisé en ce que** les parties de profil d'adaptation (5) s'étendent sur certaines zones des montants (4) et **en ce que** les nervures d'appui (12) s'étendent sur toute les longueurs des montants (4).

9. Tiroir selon l'une quelconque ou plusieurs des revendications précédentes 1 à 8, **caractérisé en ce qu'**une butée d'extrémité (11) est aboutée ou formée dans la zone, associée à la paroi arrière (3), de chaque nervure d'appui (12).

10. Tiroir selon la revendication 9, **caractérisé en ce que** chaque butée d'extrémité (11) présente un chanfrein d'entrée (13) sur le côté opposé à la paroi arrière (3), et **en ce que** la surface frontale (15) en contact avec la paroi arrière est conçue plane et est perpendiculaire à la nervure d'appui (12).

11. Tiroir selon l'une quelconque des revendications précédentes, **caractérisé en ce que** les parties coudées (8) sont coudées par rapport à la branche centrale de la paroi arrière (3) de 90° ou un angle inférieur à 90°.

12. Tiroir selon l'une quelconque des revendications précédentes, **caractérisé en ce que** les entailles (6, 7) sont délimitées côté arrière par des empreintes (6a, 7a), sur les arêtes frontales (6b, 7b) desquelles les bords (8a) libres des parties coudées (8) de la paroi arrière (3) s'appliquent en soutien.

13. Tiroir selon la revendication 12, **caractérisé en ce que** la paroi arrière (3) s'applique côté intérieur sur des arêtes frontales (4a) des montants latéraux (4) et **en ce que** la distance entre les arêtes frontales (6b, 7b) des empreintes (6a, 7a) et les arêtes frontales (4a) des montants latéraux (4) est légèrement inférieure à la distance entre les bords (8a) libres des parties coudées (8) et le côté intérieur de la paroi arrière (3).
